(19) Europäisches Patentamt
European Patent Office
Office européen des brevets

(11) **EP 3 399 865 B1**

(12) **EUROPEAN PATENT SPECIFICATION**

(45) Date of publication and mention
of the grant of the patent:
**10.07.2019 Bulletin 2019/28**

(51) Int Cl.:
*A23G 9/08* *(2006.01)*       *A23G 9/22* *(2006.01)*
*A23G 9/28* *(2006.01)*

(21) Application number: **16808688.2**

(22) Date of filing: **09.12.2016**

(86) International application number:
**PCT/EP2016/080429**

(87) International publication number:
**WO 2017/118527 (13.07.2017 Gazette 2017/28)**

(54) **VALVE FOR DISPENSING FROZEN CONFECTION**

VENTIL ZUR ABGABE VON EISKONFEKT

VANNE PERMETTANT DE DISTRIBUER UNE CONFISERIE CONGELÉE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.01.2016 EP 16150649**

(43) Date of publication of application:
**14.11.2018 Bulletin 2018/46**

(73) Proprietors:
• **Unilever PLC, a company registered in England
and
Wales under company no. 41424 of
London EC4Y 0DY (GB)**
Designated Contracting States:
**CY GB IE MT**
• **Unilever N.V.
3013 AL Rotterdam (NL)**
Designated Contracting States:
**AL AT BE BG CH CZ DE DK EE ES FI FR GR HR
HU IS IT LI LT LU LV MC MK NL NO PL PT RO RS
SE SI SK SM TR**

(72) Inventor: **GARCIA NARANJO, Alberto**
**Cambridge**
**Cambridgeshire CB23 2RF (GB)**

(74) Representative: **Askew, Sarah Elizabeth**
**Unilever PLC**
**Unilever Patent Group**
**Colworth House**
**Sharnbrook**
**Bedford MK44 1LQ (GB)**

(56) References cited:
**WO-A1-2007/039158**       **WO-A1-2013/124193**
**GB-A- 2 418 970**           **US-A- 3 052 381**
**US-A- 5 463 878**           **US-A- 5 494 194**

**Description**

**Field of the invention**

The present invention relates to dispensing frozen confections. In particular, the invention relates to dispensing frozen confections through valves having a housing with a stem slidably mounted therein.

**Background of the invention**

Soft ice cream is normally dispensed at the point of sale from a soft serve ice cream machine, i.e. a semi-continuous, pressurised scraped surface heat exchanger in which a liquid mix is frozen and aerated. It is typically dispensed at temperatures of -4 to -8 degrees centigrade, for example into a cone, and is then immediately consumed. It is liked by many consumers because of its texture, which is softer than that of ice cream served by scooping from a container kept in a freezer cabinet at around -18 degrees centigrade. Soft serve ice cream machines have a number of disadvantages: they are large and expensive, require training to operate, consume considerable energy, do not deliver consistent product quality if used over a period of time and are inconvenient for the operator to dismantle and clean. Each machine can also only offer one type of product (e.g. flavour/ice cream/sorbet etc) at a time - separate freezer barrels are required for different products.

Soft serve ice cream machines are typically equipped with a gate-type valve, more especially a piston-type valve. For example US 3,052,381 discloses a piston cock unit for dense or pasty substances such as ic-cream, comprising a cylinder formed of nonmetallic heat insulating material disposed substantially vertically and open at its top and closed by a bottom wall provided with an outlet port, a feed duct for feeding the pasty substance to the cylinder to a feed port opening in said cylinder slightly above its bottom wall, a piston substantially filling said cylinder slidably mounted within the cylinder between upper and lower positions and covering said feed and outlet ports in its lower position, a pair of parallel, spaced grooves formed in the lower part of said piston, a packing ring in each of the said grooves, said grooves and rings being positioned one above and the other below said feed port in the lower position of said piston, both said packing rings being disposed above said feed port in the upper position of the piston, a vertical row of rack-like indentations formed in said piston near its upper end, a slit in the upper portion of the cylinder, a toothed sector pivotally mounted in said slit and meshing with said rack-like indentations of the piston, and an operating handle fixed to said toothed sector to rotate the same so as to shift said piston between said lower position in which it closes both the feed duct port and the outlet port and said upper position in which both the feed port and the outlet port are open and in communication with each other.

In recent years, systems for dispensing frozen confections such as soft ice cream have been developed in which pre-packaged ice cream is delivered from a container by a dispensing device. In particular systems which employ bag-in-bottle type containers have been developed.

WO 2013/124193 A discloses a method for dispensing a frozen confection comprising: providing a refrigerated, insulated chamber, which houses at least one container, containing a frozen confection at a temperature of -12 °C or below; wherein the at least one container has an outlet which is closed by a self-closing valve; wherein the container comprises a flexible bag containing the frozen confection located inside a bottle; pressurising gas in the region inside the bottle and outside the flexible bag thereby applying pressure to the frozen confection so that the valve opens and the frozen confection is forced out of the container through the outlet; releasing the pressure so that the valve closes.

Such systems have several advantages over conventional soft serve machines, especially regarding hygiene and ease of cleaning owing to the use of pre-packaged ice cream. Pre-packaged ice cream is most stable at lower temperatures and so it is desirable for these systems to be efficient at dispensing at temperatures below -12 °C.

The present inventors have now recognized that there is a need for improvements in valves for dispensing frozen confections like soft ice. In particular the present inventors have found that there is a need for valves that provide one or more of the following advantages:

-    Efficient dispensing even at temperatures below -12 °C.
-    Ability to be used (and/or reused) with one or more receptacles of pre-packed frozen confection.
-    Opening and/or closing of the valve is independent of the pressure applied to frozen confection to be dispensed.

**Summary of the invention**

In a first aspect, the present invention is directed to a valve for dispensing frozen confection, wherein the valve comprises:

   (a)a housing having a bore extending from an outlet end having an outlet orifice to a sealed end, the housing comprising an inlet orifice at a position between the ends; and

(b)a valve stem slidably mounted within the bore of the housing wherein the stem comprises an upper gasket in sealing engagement with the housing;

wherein:

- the bore of the housing narrows in a region towards the outlet end sufficient to form a valve seat on which the stem rests with the valve in a closed position;
- the housing and stem are arranged such that on application of an external opening force to one or other of the housing or stem, the housing and stem slide relative to one another to lift the stem from the valve seat and bring the inlet orifice and outlet orifice into fluid communication; and
- the upper gasket remains in sealing engagement with the housing when the housing and stem slide relative to one another during application of the opening force;

wherein the valve comprises a lower gasket that forms a seal between the stem and bore at the valve seat.

In conventional piston-type valves such as disclosed in US 3,052,381, the stem is in sealing engagement with the whole circumference of a bore of a housing until a lower gasket is raised above the inlet orifice and even when in line with the orifice is still in contact with part of the circumference of the bore. The present inventors have found that such an arrangement is problematic, especially when dispensing ice cream at very low temperatures (e.g. below -12 °C) as a large opening force is required to overcome the friction caused by the lower gasket being in contact with the bore for a large portion of its travel. The inventors have found that by providing the valve with the seat as claimed, the lower part of the stem need only be in contact with the bore in the narrowed region of the bore, which significantly reduces the force required to open the valve.

To ensure a good seal between the stem and housing in the seat, the valve seat comprises the lower gasket. This "lower gasket" may be mounted on the housing or the stem or both. Preferably (and especially for ease of manufacture) the lower gasket is mounted on the stem, most preferably mounted such as when the valve is opening the lower gasket is brought out of the region of the bore which narrows towards the outlet end so that the lower gasket is brought out of contact with the housing.

The valve of the present invention requires application of an external opening force for actuation. By "external opening force" is meant that the valve is not opened by a dispensing force applied to the frozen confection to be dispensed therethrough. This arrangement has the advantage that the dispensing force acting on the frozen confection does not have to be removed between each serving. For example, where gas pressure is used to generate the dispensing force, this allows for use of smaller pumps and/or dispenses with the need for a gas reservoir that would otherwise be required to ensure that a device equipped with the valve could rapidly dispense product on demand. The upper gasket remains in sealing engagement with the housing when the housing and stem slide relative to one another during application of the opening force as this allows for the upper gasket to be the seal for the sealed end without needing further sealing arrangements or material. This is especially desirable where the bore extends through the sealed end. Having the bore extending through the sealed end allows for easier assembly and/or cleaning of the valve. Preferably the upper gasket is located at a position between the inlet orifice and the sealed end of the housing when the stem rests on the valve seat.

Preferably one or both of the upper and lower gaskets is in the form of an o-ring, more preferably an o-ring formed from rubber or another elastomeric material.

To aid closing it is preferred that the valve is spring-loaded wherein the force of the spring helps to close the valve without a user having to apply a closing force. Therefore it is preferred that the valve comprises a resiliently biasable member arranged to force the inlet orifice and outlet orifice out of fluid communication when the opening force is removed. The resiliently biasable member could be, for example, a block of naturally elastic material (such as rubber or another elastomer) but preferably is a helical spring.

To avoid contamination of the biasable member with frozen confection it is preferred that the resiliently biasable member is arranged to be out of contact with frozen confection in both the closed and open states of the valve. More preferably the resiliently biasable member is located in a chamber above the sealed end of the housing. More preferably still the chamber extends from a lower end for receiving the valve stem to an upper open end. Provision of the chamber with an open end allows for easy cleaning of the chamber and biasable member.

To allow for better cleaving of the stream of frozen confection being dispensed on closing of the valve it is preferred that the stem comprises a solid face that is arranged between the valve seat and the outlet orifice with the valve in the closed position. Furthermore, the present inventors have found that frozen confection, especially frozen confection at a temperature of -12 °C or below, can interfere with closure of the valve if there is a tight correspondence between the profile of the stem and that of the bore in the region of the outlet orifice. Therefore it is preferred that the stem tapers towards the solid face. Also preferred to aid cleaving of the stream of confection and/or to help with the definition of the shape of the frozen confection, the solid face of the stem is preferably shaped to correspond to the shape of the outlet orifice. More preferably still is shaped to correspond to the shape of the outlet orifice but does not form an interference fit therewith with the valve in a closed position. Most preferably, the face does not contact a rim of the housing defining the outlet orifice with the valve in a closed position.

Preferably the outlet orifice is shaped to form the frozen confection into a fluted configuration when dispensed therethrough. For example the outlet orifice may have a star or flower shape.

The present invention is applicable to a range of frozen confections. Frozen confection means a confection made by freezing a mix (preferably a pasteurized mix) of ingredients such as water, fat, sweetener, protein (normally milk proteins), and optionally other ingredients such as emulsifiers, stabilisers, colours and flavours. Frozen confection materials may be aerated. Frozen confection materials include ice cream, gelato, frozen yoghurt, sorbets, granitas, shaved ices and the like. Preferably the frozen confection is ice cream.

The frozen confection may be aerated. The term "aerated" means that gas has been intentionally incorporated into the product, such as by mechanical means. The gas can be any food-grade gas such as air, nitrogen or carbon dioxide. The extent of aeration is typically defined in terms of "overrun" (OR). In the context of the present invention, %overrun is defined in volume terms (measured at atmospheric pressure) as:

$$OR = \frac{\text{volume of frozen aerated product} - \text{volume of premix at ambient temp}}{\text{volume of premix at ambient temp}} \times 100$$

The amount of overrun present in the aerated frozen confection will vary depending on the desired product characteristics. In the context of the present invention the level of overrun is typically from 0 to 150%, more preferably from 60 to 150%, most preferably from 60 to 100%.

The valve is preferably used for dispensing frozen confections wherein the temperature of the frozen confection immediately prior to dispensing is no greater than -12 °C, more preferably between -14 and -27 °C, more preferably still between -16 and -25 °C and most preferably between -18 and -22 °C.

The valve of the present invention is preferably reusable. To that end a convenient feature is for the housing to comprise a tubular inlet extending away from the inlet orifice and the tubular inlet comprises a deformable gasket on an outer surface thereof. Such a tubular inlet may allow for easy connection or removal of the valve from a receptacle comprising a tubular inlet.

Therefore in a second aspect the present invention provides a receptacle and valve assembly for use in a device for dispensing frozen confection, wherein:

(a) the receptacle comprises a product compartment containing the frozen confection located inside a bottle and having a tubular outlet; and

(b) the valve is according to any embodiment of the first aspect wherein the housing comprises a tubular inlet extending away from the inlet orifice and the tubular inlet comprises a deformable gasket on an outer surface thereof;

wherein the tubular inlet of the valve is receivable within the tubular outlet of the receptacle to allow the deformable gasket to form a fluid-tight seal with an inner wall of the tubular outlet.

The use of such an assembly where the valve can be readily received by the receptacle allows for reusable valves to be employed. Furthermore an advantage of having the tubular inlet of the valve receivable within the tubular outlet of the receptacle is that the valve can be removed from the receptacle without leaving residual frozen confection on an outer surface of the receptacle. Such residual surface frozen confection is unhygienic. In addition, in the case where the receptacle is not empty and will be reused at a future time, frozen surface residue may interfere with sealing of the valve and receptacle if the tubular outlet of the receptacle were receivable in the tubular outlet of the valve.

Preferably the deformable gasket comprises one or more o-rings. Additionally or alternatively the gasket may be formed from rubber or another elastomeric material.

The dispensing of food compositions is most effectively and hygienically achieved if the dispensing force does not act directly on the food composition but rather through a moveable wall (such as piston, bag or membrane). Thus, it is preferred that the receptacle comprises a moveable wall through which a dispensing force can be transmitted to the frozen composition. Examples of such receptacles include bag-in-bottles (where the bag acts as the moveable wall) and cartridges containing pistons (where the piston acts as the moveable wall) although other configurations are possible including, for example, containers with an end wall that is deformable to become the moveable wall (as described, for example in US 5,893,485). Examples of bag-in-bottle type receptacles are described in WO 2007/039158 A and examples of piston-in-cartridge type receptacles are described in EP 1 449 441 A both of which documents are hereby incorporated by reference in their entirety.

A convenient means of applying a dispensing force is through compressed gas pressure. Therefore it is preferred that the receptacle comprises a compressed gas inlet. More preferably the receptacle comprises a propellant compartment separated from the product compartment by the moveable wall, wherein the propellant compartment is in fluid communication with the compressed gas inlet.

The utility of the present invention is especially enhanced where the receptacle is replaceable in the device. Therefore it is preferred that the receptacle is disposable or recyclable.

The receptacle preferably contains multiple portions of frozen confection, more preferably wherein the receptacle contains at least 200 g of frozen confection, even more preferably between 250 and 3000 g, more preferably still between 300 and 2000 g and most preferably between 400 and 1000 g.

In a third aspect the present invention is directed to a method for dispensing frozen confection comprising:

- assembling the valve and receptacle into an assembly according to at least present claim 12;
- applying a dispensing force to the product compartment; and
- opening the valve to allow the dispensing force to urge at least some of the frozen confection out of the valve.

If the receptacle comprises a compressed gas inlet the dispensing force is preferably applied by a device comprising:

- • a compressed gas source; and
- • a gas conduit extending from the compressed gas source to a compressed gas outlet connectable to the compressed gas inlet of the receptacle.

After dispensing at least a portion of the frozen confection, the valve is typically removed from the receptacle. Therefore preferably the method comprises the additional steps of:

- closing the valve;
- removing the dispensing force; and
- disassembling the assembly by removing the tubular inlet of the valve from the tubular outlet of the receptacle.

In a preferred embodiment the valve is then cleaned so it can be reused with the same receptacle or a new receptacle.

Were the receptacle contains multiple portions of frozen confection, the receptacle will typically be stored in a freezer between dispensing occasions as this removes or at least reduces the need for the device to have its own refrigeration means and/or to be insulated. Thus in a preferred embodiment of the method, the receptacle is stored at a temperature of less than -7 °C, more preferably less than -12 °C, most preferably at a temperature of from -15 to -25 °C after being disassembled from the valve. For example, the receptacle is stored in a freezer, preferably a domestic freezer. For hygienic reasons, it is preferred that the tubular outlet of the receptacle is capped during storage.

**Detailed description of preferred embodiments**

The present invention will now be described, by way of example only, with reference to the figures, wherein:

Figure 1 shows a side view of the outside of a device suitable for dispensing frozen confection from a valve-receptacle assembly according to an embodiment of the invention.

Figure 2 shows a sectional view of the device of Figure 1 with its door open and a receptacle and valve assembly in place for dispensing.

Figure 3 shows an exploded view of the receptacle and valve assembly for use in the device of Figure 1.

Figure 4 shows a sectional view of the valve and part of the receptacle of the assembly of Figure 3 after being assembled.

Figure 5 shows a sectional view of the valve of the assembly of Figures 3 and 4 in a closed configuration.

Figure 6 shows a sectional view of the valve of Figure 5 in an open configuration.

Figure 7 shows a bottom plan view of the outlet end of the valve of Figure 5.

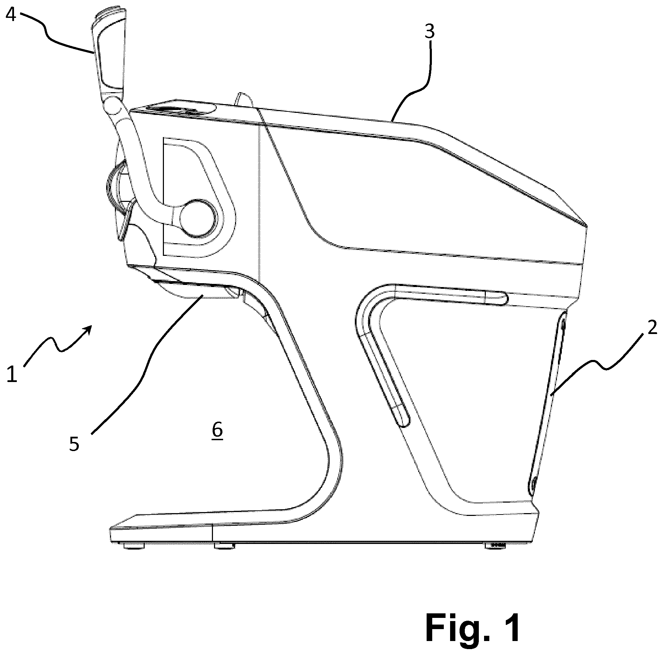

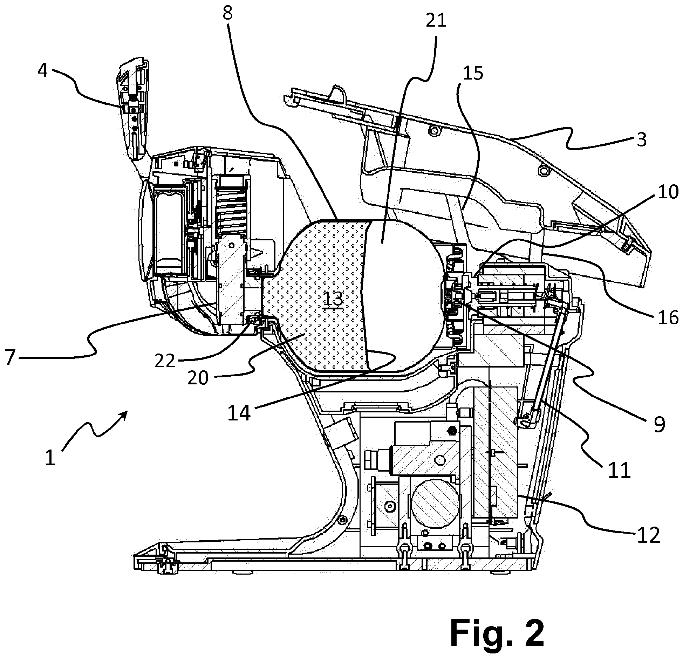

The embodiment of the device shown in Figures 1 and 2 is suitable for dispensing frozen confections from bag-in-bottle type receptacles. The device (1) comprises a housing (2) and an upper door (3) which together enclose the receptacle (8) and valve (7). The door (3) is connected to the housing (2) through two pairs of leg struts (15,16) to provide a 4 bar linkage mechanism about which the door can be moved in and out of closure with the housing (2).

The bag (14) inside the bottle of the receptacle (8) forms a compartment (20) containing the frozen confection (13). The compartment (20) containing the frozen confection (13) is open at a tubular outlet (22) which is also the neck of the bottle of the receptacle (8) and which receives a tubular inlet (41) of the valve (7). The bottle of the receptacle (8) also comprises an inlet (9) through which compressed gas can be introduced through an orifice thereof to a propellant compartment (21) separated from the product compartment (20) by the bag (14).

As best seen in Figure 2, the device (1) comprises a gas outlet (10) which with the door (3) in an open position is aligned with but spaced away from the gas inlet (9) of the receptacle (8). The gas outlet (10) is connected to an air pump (12) through an air line (11), forming in this embodiment the compressed gas source and conduit respectively.

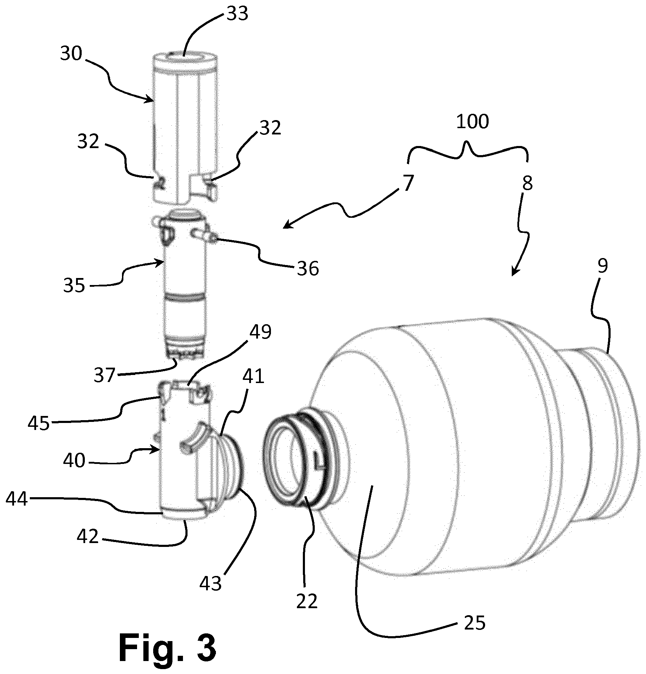

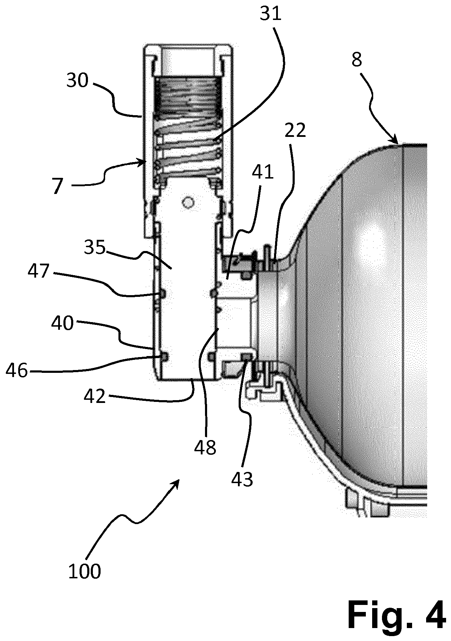

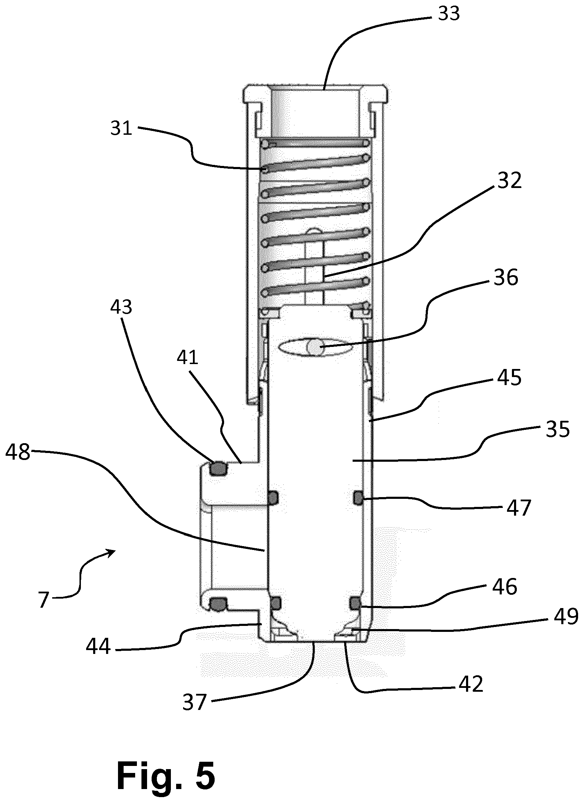

The receptacle and valve assembly (100) is shown in detail in Figures 3 and 4. Further details of the valve (7) are shown in Figures 5 to 7.

The valve (7) can be separated into three parts for easy cleaning: a cap (30), a valve stem (35) and a valve housing (40). The cap contains a spring (31) and has two recesses (32) for receiving actuating rods (36) which project from the surface of the stem (35). The recesses (32) are L-shaped such that the stem (35) can be locked in the cap (30) by inserting the actuating rods (36) in the bottom of the recesses (32) and then twisting the cap (30) in a clockwise direction. The stem (35) complete with cap (30) can then be slid into a bore (49) of the housing (40) where it is sealed therein owing to elastomeric o-rings forming the upper (47) and lower (46) gaskets on the stem (35).

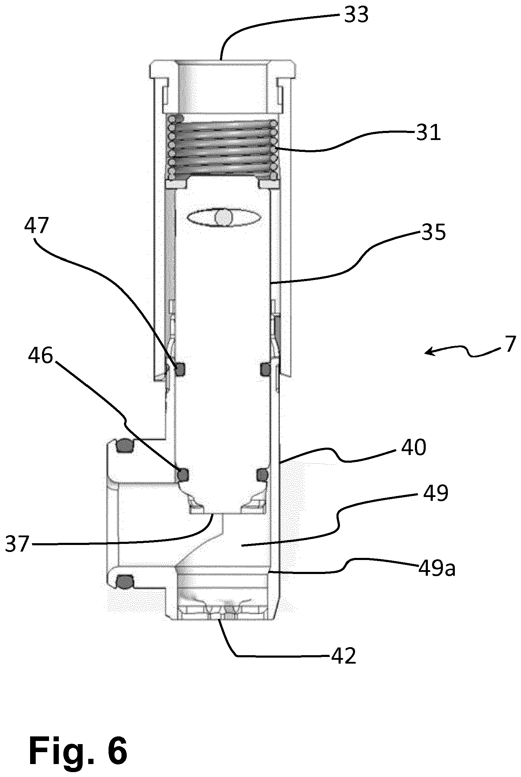

The valve housing (40) comprises a main cylindrical section which contains the bore (49) receiving the stem (35) and which extends from a sealed end (45) to an outlet end (44) having an outlet orifice (42). Part way along the bore (49) the wall of the housing has an inlet orifice (48) therein and from which the tubular inlet (41) radially projects therefrom. The tubular inlet (41) has a gasket (43) in the form of an elastomeric o-ring on its outside surface. As best seen in Figure 6, the diameter of the bore (49) of the housing (40) decreases in the region (49a) directly below the inlet orifice (48).

As seen in Figures 5 and 6, with the valve assembled the upper gasket (47) seals with the inner wall of the bore (49) above the inlet orifice (48) in both open and closed configurations. This prevents fluid communication between the inlet orifice (48) and the sealed end (45).

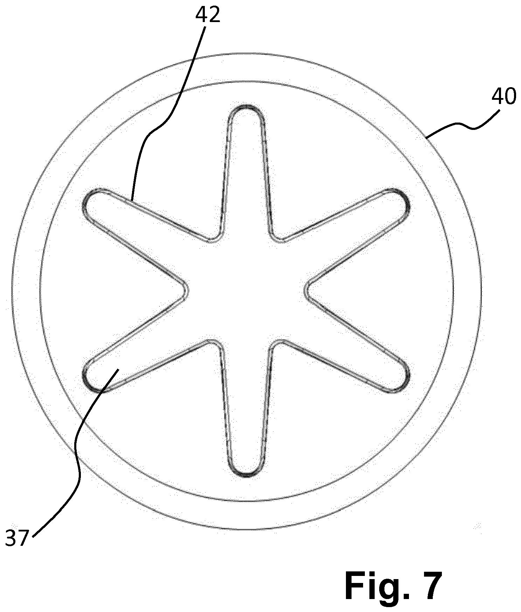

With the valve (7) assembled and in the absence of an opening force, the stem (35) is held in a closed position in the housing (40) owing to downward force of the spring (31) as shown in Figure 5. In this position, the lower gasket (46), which in this embodiment is an o-ring attached to the stem (35), seals to the inner wall of the bore (49) in its narrowed region (49a) and so prevents fluid communication between the inlet orifice (48) and the dispensing orifice (42). Below the lower gasket (46) the diameter of the stem (35) narrows until it reaches a bottom face (37) of the stem (35). As best seen in Figure 7, both the bottom face (37) of the stem (35) and the outlet orifice (42) of the housing (40) have a 6-pointed star shape with the face (37) being slightly smaller than the orifice (42) so as not to touch the rim of the orifice.

The valve (7) is opened by applying an upwards opening force to the underside of the actuating rods (36) of the stem (35). This lifts the stem (35) from the valve seat formed by the narrowed region (49a) of the bore (49) bringing the lower gasket (46) out of contact with inner wall of the bore (49). In the fully opened configuration shown in Figure 6, the stem (35) has been lifted to a position where the lower gasket (46) is positioned above the inlet orifice (48). Owing to the lower gasket (46) being mounted to form a good seal when located in the narrowed region (49a) of the bore (49), when lifted above this region (49a) the lower gasket (46) does not contact the inner wall of the bore (49) throughout the remainder (and the majority) of the travel of the stem (35) between the closed and open positions. This minimizes any contribution of friction from the lower gasket (46) to the force need to fully open the valve (7).

As the stem (35) is pushed upwards by the opening force, it compresses the spring (31) in the cap (30). Once the opening force is released, the spring (31) expands and pushes the stem (35) back to its closed position. The taper of the stem (35) diameter at its lower end towards the face (37) and the sizing of the face (37) to avoid it touching the rim of the outlet orifice (42) ensure that any residual frozen confection in the narrowed region (49a) of the bore (49) has a flow path out of the valve (7) thus preventing interference of such residual material with the sealing of the lower gasket (46) in the valve seat.

The assembly (100) is assembled by pushing the tubular inlet (41) of the valve (7) into the tubular outlet (22) of the receptacle (8), wherein the o-ring (43) is compressed against the inner surface of the tubular outlet (22) to provide a fluid-tight fit.

The bottle of the receptacle (8) comprises a generally cylindrical body that has a much greater diameter than the tubular outlet (22) and so the receptacle body narrows as it meets the tubular outlet (22) to form a shoulder (25).

In use, the valve (7) is first assembled as described above. A receptacle (8) filled with ice cream or another frozen confection (13) is then taken from a storage freezer and the tubular inlet (41) of the valve (7) inserted in the tubular outlet (22) of the receptacle to form the receptacle-valve assembly (100). The assembly (100) is then installed in the device (1) as shown in Figure 2. The door (3) is then swung closed about the 4 bar linkage formed by the struts (15, 16). As the rear struts (16) pivot forward, they move the gas outlet (10) into sealing engagement with the gas inlet (9) of the receptacle (8) through a transmission mechanism (not shown).

The housing (2) also comprises a micro-switch (not shown) which is activated only when the door (3) is in the closed position. Activation of the micro-switch causes the air pump (12) to be activated and begin feeding air through the air line (11), the gas outlet (10) and the gas inlet (9) into the propellant compartment (21) of the receptacle (8). Air is pumped until the desired pressure (for example about 2 bar) is achieved.

The user then actuates the valve (7) by pulling a handle (4). Downwards movement of the handle (4) causes a transmission mechanism (not shown) to push the actuating rods upwards which in turn lifts the valve stem (35) from the valve seat as described above. The frozen confection (13) is urged through the open valve (7) by the air pressure acting on the bag (14). The dispensed ice cream flows through the outlet orifice (42) to a dispensing opening (5) below the valve (7) and above a space (6) which can accommodate a bowl, cone or other receptacle. If a large amount of ice cream is dispensed then the air pump (12) may periodically activate to keep the pressure within the receptacle (8) above a set threshold and thus prevent the flow rate of the ice cream becoming too slow.

Once the desired amount of ice cream has been dispensed, the user returns the handle (4) to its original position which removes the opening force from the actuator rods (36) and the valve closes owing to downward force from the spring (31) as described above. The user then opens the door (3) which causes the pump to deactivate and pressure inside the device and receptacle to be dumped. As the door (3) is opened, the rear struts (16) pivot backwards, causing the gas outlet (10) to slide away from the gas inlet (9) of the receptacle (8).

The user then removes the receptacle-valve assembly (100) from the device (1). The tubular inlet (41) of the valve (7) is then pulled from the tubular outlet (22) of the receptacle to separate the valve (7) and receptacle (8). A cap (not shown) is placed on the tubular outlet (22) of the receptacle (8) and the receptacle then placed in the storage freezer until the next dispensing occasion or (if empty) sent for recycling. Meanwhile the valve (7) can be cleaned by flushing with water and (optionally) detergent. Conveniently the valve (7) is separated into the three parts (cap (30), stem (35) and valve housing (40)) to allow more efficient and complete cleaning. Also the top end (33) of the cap (31) is open to allow greater access to clean the interior of the cap (30) and/or the spring (31). Because during dispensing the frozen confection (13) flows out of the receptacle (8) through the tubular inlet (41) of the valve inserted in the tubular outlet (22) of the receptacle (8), the outer surface of the receptacle (8) never comes into contact with frozen confection (13). Thus there is no need to clean the receptacle (8) after a dispensing occasion. Furthermore the inner surface of the tubular outlet (22) stays substantially free from contact with frozen confection (13) and so allows for efficient sealing with the gasket (43) on the tubular inlet (41) of the valve.

## Claims

1. A valve (7) for dispensing frozen confection, wherein the valve comprises:

   (a) a housing (40) having a bore (49) extending from an outlet end (44) having an outlet orifice (42) to a sealed end (45), the housing (40) comprising an inlet orifice (48) at a position between the ends; and
   (b) a valve stem (35) slidably mounted within the bore (49) of the housing wherein the stem comprises an upper gasket (47) in sealing engagement with the housing; wherein:

   - the bore (49) of the housing narrows in a region (49a) towards the outlet end (44) sufficient to form a valve seat on which the stem (35) rests with the valve in a closed position;
   - the housing (40) and stem (35) are arranged such that on application of an external opening force to one or other of the housing or stem, the housing and stem slide relative to one another to lift the stem from the valve seat and bring the inlet orifice (48) and outlet orifice (42) into fluid communication; and
   - the upper gasket (47) remains in sealing engagement with the housing when the housing and stem slide relative to one another during application of the opening force;

   wherein the valve (7) comprises a lower gasket (46) that forms a seal between the stem (35) and bore (49) at the valve seat.

2. The valve as claimed in claim 1 wherein the lower gasket (46) is mounted on the stem (35).

3. The valve as claimed in claim 2 wherein on application of the opening force the stem (35) and housing (40) slide relative to each other such that the lower gasket (46) is brought out of the region (49a) of the bore (49) which narrows towards the outlet end (44) such that the lower gasket is brought out of contact with the housing.

4. The valve as claimed in any one of the preceding claims wherein the upper gasket (47) is located at a position between the inlet orifice (48) and the sealed end (45) of the housing (40) when the stem (35) rests on the valve seat.

5. The valve as claimed in any one of the preceding claims wherein the valve comprises a resiliently biasable member (31) arranged to force the inlet orifice (48) and outlet orifice (42) out of fluid communication when the opening force is removed.

6. The valve as claimed in claim 5 wherein the resiliently biasable member (31) is arranged to be out of contact with frozen confection in both the closed and open states of the valve.

7. The valve as claimed in any one of the preceding claims wherein the stem (35) is closed by a solid face (37) that is arranged between the valve seat and the outlet orifice with the valve in the closed position.

8. The valve as claimed in claim 7 wherein the stem (35) tapers towards the solid face (37).

9. The valve as claimed in any one of claims 7 or 8 wherein the solid face (37) of the stem (35) is shaped to correspond to the shape of the outlet orifice (42).

10. The valve as claimed in any one of the preceding claims wherein the outlet orifice (42) is shaped to form the frozen confection into a fluted configuration when dispensed therethrough.

11. The valve as claimed in any one of the preceding claims wherein the housing (40) has a tubular inlet (41) extending away from the inlet orifice (48) and the tubular inlet (41) comprises a deformable gasket on an outer surface thereof.

12. A receptacle (8) and valve (7) assembly (100) for use in a device (1) for dispensing frozen confection, wherein:

    (a) the receptacle (8) comprises a product compartment (20) containing the frozen confection located inside a bottle and having a tubular outlet (22); and
    (b) the valve (7) is as claimed in claim 11;

    wherein the tubular inlet (41) of the valve (7) is receivable within the tubular outlet (22) of the receptacle (8) to allow the deformable gasket to form a fluid-tight seal with an inner wall of the tubular outlet (22).

13. The receptacle and valve assembly as claimed in claim 12 wherein the receptacle (8) comprises a compressed gas inlet (9).

14. The receptacle and valve assembly as claimed in claim 13 wherein the receptacle (8) comprises a propellant compartment (21) separated from the product compartment (20) by the moveable wall, wherein the propellant compartment (21) is in fluid communication with the compressed gas inlet (9).

15. A method for dispensing frozen confection comprising:

    - assembling the valve (7) and receptacle (8) into an assembly (100) as claimed in any one of claims 12 to 14;
    - applying a dispensing force to the product compartment (20); and
    - opening the valve (7) to allow the dispensing force to urge at least some of the frozen confection out of the valve.

**Patentansprüche**

1. Ventil (7) zum Ausgeben von gefrorenem Konfekt, wobei das Ventil Folgendes umfasst:

    (a) ein Gehäuse (40), das eine Bohrung (49) aufweist, die sich von einem Auslassende (44), das eine Auslassöffnung (42) aufweist, zu einem abgedichteten Ende (45) erstreckt, wobei das Gehäuse (40) eine Einlassöffnung (48) an einer Position zwischen den Enden umfasst; und
    (b) einen Ventilschaft (35), der in der Bohrung (49) des Gehäuses gleitfähig angebracht ist, wobei der Schaft eine obere Dichtung (47) in dichtendem Eingriff mit dem Gehäuse umfasst;
    wobei:

      - sich die Bohrung (49) des Gehäuses in einem Bereich (49a) in Richtung des Auslassendes (44) ausreichend verengt, um einen Ventilsitz zu bilden, auf dem der Schaft (35) ruht, wenn das Ventil in einer geschlossenen Position ist;

- wobei das Gehäuse (40) und der Schaft (35) so angeordnet sind, dass beim Ausüben einer Kraft von außen zum Öffnen auf das Gehäuse oder auf den Schaft das Gehäuse und der Schaft relativ zueinander gleiten, um den Schaft aus dem Ventilsitz anzuheben und die Einlassöffnung (48) und die Auslassöffnung (42) in Fluidkommunikation zu bringen; und

- die obere Dichtung (47) mit dem Gehäuse in dichtendem Eingriff bleibt, wenn das Gehäuse und der Schaft während des Ausübens der Kraft zum Öffnen relativ zueinander gleiten;

wobei das Ventil (7) eine untere Dichtung (46) umfasst, die eine Dichtung zwischen dem Schaft (35) und der Bohrung (49) bei dem Ventilsitz bildet.

2. Ventil nach Anspruch 1, wobei die untere Dichtung (46) an dem Schaft (35) angebracht ist.

3. Ventil nach Anspruch 2, wobei beim Ausüben der Kraft zum Öffnen der Schaft (35) und das Gehäuse (40) relativ zueinander so gleiten, dass die untere Dichtung (46) aus dem Bereich (49a) der Bohrung (49), der sich in Richtung des Auslassendes (44) verengt, weg bewegt wird, so dass die untere Dichtung nicht mehr mit dem Gehäuse in Kontakt ist.

4. Ventil nach einem der vorhergehenden Ansprüche, wobei sich die obere Dichtung (47) an einer Position zwischen der Einlassöffnung (48) und dem abgedichteten Ende (45) des Gehäuses (40) befindet, wenn der Schaft (35) auf dem Ventilsitz ruht.

5. Ventil nach einem der vorhergehenden Ansprüche, wobei das Ventil ein elastisch vorbelastbares Element (31) umfasst, das so angeordnet ist, dass es die Fluidkommunikation der Einlassöffnung (48) und der Auslassöffnung (42) unterbricht, wenn die Kraft zum Öffnen nicht weiter ausgeübt wird.

6. Ventil nach Anspruch 5, wobei das elastisch vorbelastbare Element (31) so angeordnet ist, dass es im geschlossenen und im offenen Zustand des Ventils nicht mit gefrorenem Konfekt in Kontakt ist.

7. Ventil nach einem der vorhergehenden Ansprüche, wobei der Schaft (35) durch eine massive Fläche (37) geschlossen wird, die zwischen dem Ventilsitz und der Auslassöffnung angeordnet ist, wenn sich das Ventil in der geschlossenen Position befindet.

8. Ventil nach Anspruch 7, wobei der Schaft (35) in Richtung der massiven Fläche (37) konisch zuläuft.

9. Ventil nach einem der Ansprüche 7 oder 8, wobei die massive Fläche (37) des Schafts (35) so geformt ist, dass sie der Form der Auslassöffnung (42) entspricht.

10. Ventil nach einem der vorhergehenden Ansprüche, wobei die Auslassöffnung (42) so geformt ist, dass das gefrorene Konfekt in eine geriffelte Konfiguration geformt wird, wenn es dort hindurch ausgegeben wird.

11. Ventil nach einem der vorhergehenden Ansprüche, wobei das Gehäuse (40) einen rohrförmigen Einlass (41) aufweist, der sich von der Einlassöffnung (48) weg erstreckt, und wobei der rohrförmige Einlass (41) eine verformbare Dichtung an einer äußeren Oberfläche umfasst.

12. Anordnung (100) aus Hülle (8) und Ventil (7) zur Verwendung in einer Vorrichtung (1) zum Ausgeben von gefrorenem Konfekt, wobei:

(a) die Hülle (8) ein Produktfach (20) umfasst, das das gefrorene Konfekt enthält, das sich in einer Flasche befindet und einen rohrförmigen Auslass (22) aufweist; und
(b) das Ventil (7) gemäß Anspruch 11 ausgebildet ist;

wobei der rohrförmige Einlass (41) des Ventils (7) in dem rohrförmigen Auslass (22) der Hülle (8) aufgenommen werden kann, damit die verformbare Dichtung eine fluiddichte Dichtung mit einer Innenwand des rohrförmigen Auslasses (22) bildet.

13. Anordnung aus Hülle und Ventil nach Anspruch 12, wobei die Hülle (8) einen Druckgaseinlass (9) umfasst.

**14.** Anordnung aus Hülle und Ventil nach Anspruch 13, wobei die Hülle (8) ein Treibgasfach (21) umfasst, das von dem Produktfach (20) durch die bewegliche Wand getrennt ist, wobei das Treibgasfach (21) mit dem Druckgaseinlass (9) in Fluidkommunikation ist.

**15.** Verfahren zum Ausgeben von gefrorenem Konfekt, wobei das Verfahren die folgenden Schritte umfasst:

- Zusammenbauen des Ventils (7) und der Hülle (8) in eine Anordnung (100) gemäß einem der Ansprüche 12 bis 14;
- Ausüben einer Kraft zum Ausgeben auf das Produktfach (20); und
- Öffnen des Ventils (7), damit die Kraft zum Ausgeben wenigstens einen Teil des gefrorenen Konfekts aus dem Ventil drängen kann.

**Revendications**

**1.** Vanne (7) de distribution de confiserie glacée, dans laquelle la vanne comprend :

(a) un boîtier (40) présentant une perforation (49) s'étendant à partir d'une extrémité de sortie (44) présentant un orifice de sortie (42) jusqu'à une extrémité scellée (45), le boîtier (40) comprenant un orifice d'entrée (48) à une position entre les extrémités ; et
(b) une tige de vanne (35) montée de manière coulissable dans la perforation (49) du boîtier dans laquelle la tige comprend un joint supérieur (47) dans un engagement d'étanchéité avec le boîtier ;
dans laquelle :

- la perforation (49) du boîtier se rétrécit dans une région (49a) vers l'extrémité de sortie (44) suffisamment pour former un siège de vanne sur lequel la tige (35) repose avec la vanne dans une position fermée ;
- le boîtier (40) et la tige (35) sont disposés de sorte que lors de l'application d'une force d'ouverture externe à l'un ou l'autre du boîtier ou de la tige, le boîtier et la tige coulissent relativement l'un par rapport à l'autre pour lever la tige à partir du siège de vanne et amener l'orifice d'entrée (48) et l'orifice de sortie (42) dans une communication fluide ; et
- le joint supérieur (47) reste dans un engagement d'étanchéité avec le boîtier lorsque le boîtier et la tige coulissent relativement l'un par rapport à l'autre pendant l'application de la force d'ouverture ;

dans laquelle la vanne (7) comprend un joint inférieur (46) qui forme une étanchéité entre la tige (35) et la perforation (49) au siège de vanne.

**2.** Vanne selon la revendication 1, dans laquelle le joint inférieur (46) est monté sur la tige (35).

**3.** Vanne selon la revendication 2, dans laquelle lors de l'application de la force d'ouverture la tige (35) et le boîtier (40) coulissent relativement l'un par rapport à l'autre de sorte que le joint inférieur (46) est amené à l'extérieur de la région (49a) de la perforation (49) qui se rétrécit vers l'extrémité de sortie (44), de sorte que le joint inférieur est mis hors de contact avec le boîtier.

**4.** Vanne selon l'une quelconque des revendications précédentes, dans laquelle le joint supérieur (47) est disposé à une position entre l'orifice d'entrée (48) et l'extrémité scellée (45) du boîtier (40) lorsque la tige (35) repose sur le siège de vanne.

**5.** Vanne selon l'une quelconque des revendications précédentes, dans laquelle la vanne comprend un élément élastiquement inclinable (31) disposé pour forcer l'orifice d'entrée (48) et l'orifice de sortie (42) hors d'une communication fluide lorsque la force d'ouverture est retirée.

**6.** Vanne selon la revendication 5, dans laquelle l'élément élastiquement inclinable (31) est disposé pour être hors de contact avec de la confiserie congelée à la fois dans les états fermé et ouvert de la vanne.

**7.** Vanne selon l'une quelconque des revendications précédentes, dans laquelle la tige (35) est fermée par une face solide (37) qui est disposée entre le siège de vanne et l'orifice de sortie avec la vanne dans la position fermée.

**8.** Vanne selon la revendication 7, dans laquelle la tige (35) est effilée vers la face solide (37).

9. Vanne selon l'une quelconque des revendications 7 ou 8, dans laquelle la face solide (37) de la tige (35) est façonnée pour correspondre à la forme de l'orifice de sortie (42).

10. Vanne selon l'une quelconque des revendications précédentes, dans laquelle l'orifice de sortie (42) est façonné pour former la confiserie congelée dans une configuration nervurée lorsqu'elle est distribuée à travers celle-ci.

11. Vanne selon l'une quelconque des revendications précédentes, dans laquelle le boîtier (40) présente une entrée tubulaire (41) s'étendant à distance de l'orifice d'entrée (48) et l'entrée tubulaire (41) comprend un joint déformable sur une surface externe de celle-ci.

12. Assemblage (100) de réceptacle (8) et vanne (7) pour une utilisation dans un dispositif (1) de distribution de confiserie congelée, dans lequel :

    (a) le réceptacle (8) comprend un compartiment de produit (20) contenant la confiserie congelée disposée à l'intérieur d'une bouteille et présentant une sortie tubulaire (22) ; et
    (b) la vanne (7) est selon la revendication 11 ;

    dans laquelle l'entrée tubulaire (41) de la vanne (7) peut être reçue dans la sortie tubulaire (22) du réceptacle (8) pour permettre au joint déformable de former une étanchéité étanche au fluide avec une paroi interne de la sortie tubulaire (22).

13. Assemblage de réceptacle et vanne selon la revendication 12, dans lequel le réceptacle (8) comprend une entrée de gaz comprimé (9).

14. Assemblage de réceptacle et vanne selon la revendication 13, dans lequel le réceptacle (8) comprend un compartiment de propulseur (21) séparé du compartiment de produit (20) par la paroi mobile, dans lequel le compartiment de propulseur (21) est en communication fluide avec l'entrée de gaz comprimé (9).

15. Procédé de distribution de confiserie congelée comprenant :

    - l'assemblage des vannes (7) et réceptacles (8) en un assemblage (100) selon l'une quelconque des revendications 12 à 14 ;
    - l'application d'une force de distribution au compartiment de produit (20) ; et
    - l'ouverture de la vanne (7) pour permettre à la force de distribution de pousser au moins une certaine quantité de la confiserie congelée à l'extérieur de la vanne.

**Fig. 1**

**Fig. 2**

EP 3 399 865 B1

**Fig. 3**

Fig. 4

**Fig. 5**

**Fig. 6**

**Fig. 7**

**EP 3 399 865 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 3052381 A
- WO 2013124193 A
- US 5893485 A
- WO 2007039158 A
- EP 1449441 A